# EUROPEAN PATENT APPLICATION

(11) **EP 1 255 041 A2**
(43) Date of publication of application: **06.11.2002**
(21) Application number: 02252191.8
(22) Date of filing: 26.03.2002
(51) Int. Cl.: F04B 15/08

(54) **Directional, low-leakage seal assembly**

(30) Priority: 04.04.2001 US 826050
(71) Applicant: AIR PRODUCTS AND CHEMICALS, INC., Allentown, PA 18195-1501 (US)
(72) Inventor: Chalk, David Jonathan, Slatington, PA 18080 (US)
(74) Representative: Burford, Anthony Frederick

(57) **Abstract**

A seal assembly (10) for blocking flow through an annular space includes a split top ring (16) having a radially open peripheral groove (17) in an end face thereof, a split bottom ring (18) at least partially disposed in the groove (17) with the slots (24, 26) in the rings (16, 18) peripherally spaced apart, a first spring (20) for axially pressing the rings (16, 18) together, and optionally a second spring (22) for radial loading.. The seal assembly may be used as a piston ring seal (10) to seal a reciprocating piston (12) with the inner wall of the housing of a pump or as a shaft ring to seal a reciprocating shaft operating within a bore. It has particular application to a double-acting, two-stage pump for pumping cryogenic fluids.

## Description

The present invention generally relates to seals for mechanical pumps, and more particularly to dynamic seal assemblies using biasing means, such as springs, for use with a reciprocating pump for pumping a fluid that may be a liquid, a gas, or a combination of both, which is particularly useful when pumping cryogenic fluids.

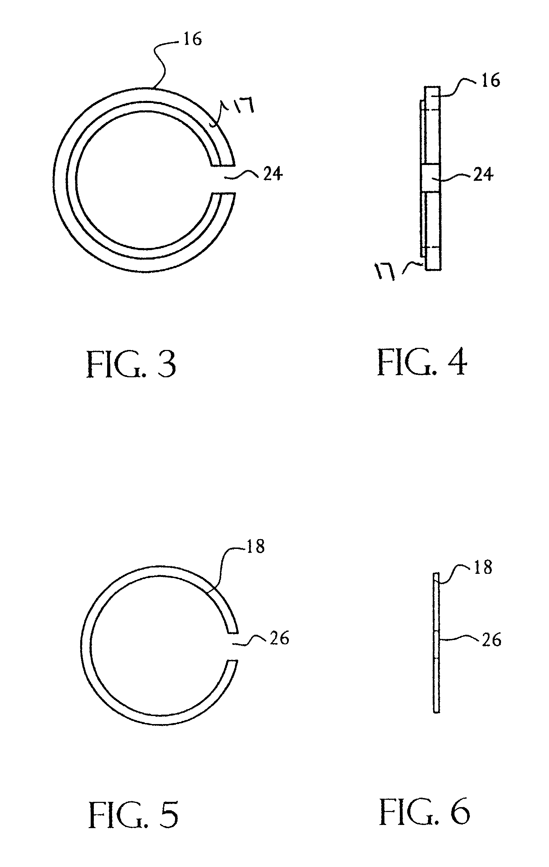

US-A-4,447,195 (Schuck) and US-A-4,559,786 (Schuck) disclose a piston ring having a tapered geometric form to minimize the unbalanced pressure forces on the piston ring, thus reducing sliding forces against a cylinder bore or rod surface. The piston ring, which is suitable for pressure differentials limited to a few hundred psi (few thousand kPa), is shown in Figure 5 of both patents. The piston seal shown in that figure includes eight separate assemblies. The first, third, fifth and seventh assemblies are gas block assemblies comprising an unsplit cylinder ring. The second and fourth assemblies consist of a beveled upper ring which is unsplit and a split beveled lower ring. The rings are held together by means of springs which exert axial force on a pusher plate and the rings themselves. The sixth and eighth assemblies are beveled rings in a beveled retainer and are split in a direction which limits leakage past the split.

The designs of some pumps for pumping cryogenic fluids allow dissipation of piston ring heating to the inlet liquid feeding the pump, which promotes vaporization of the fluid leading to poor volumetric efficiency. Other cryogenic pump designs allow dissipation of piston ring heating to both the inlet liquid and the seal leakage gas, which also promotes vaporization of the inlet liquid, leading to poor efficiency. A rejacketed cylinder design for a cryogenic pump shown in Figure 3 of US-A-4,447,195 (Schuck) and US-A-4,559,786 (Schuck) uses the discharging fluid to absorb heat both from piston ring friction and ambient heat leak, thus cooling the pump cylinder and piston ring areas. This design is suitable for pressures up to a few thousand psi (few hundred MPa), but requires increasing material thickness and weight as working pressures increase.

A one piece bi-directional self energized piston ring has been manufactured and sold by Fluorocarbon Co. Ltd. under the trademark PERMASEAL (Style No. 62606). This single-piece ring is manufactured as a solid ring, and an overlapping portion of the ring is made by cutting out a section of the solid ring. The minimum circumference of the solid ring is equal to the circumference of the bore that it is intended to seal plus an amount needed for the overlapped portion. In other words, the diameter of the resulting ring is necessarily larger than the bore that it is intended to seal by an amount equal to the overlap divided by π. This necessitates a ring design that is significantly larger in diameter than the bore that it is intended to seal if the overlap is to be significant. The amount of the overlap should be as large as possible to maximize the amount of wear and at the same time as small as possible to minimize the difference between the ring and cylinder diameters, so there is a tradeoff between these two requirements. The outward spring tension of the PERMASEAL™ ring pressing against the cylinder wall establishes an initial circumferential seal. Fluid pressure transmitted to the ring through a radial clearance between the piston and the cylinder wall causes the side face of the piston ring to seal against the side face of the piston ring groove.

US-A-4, 207,800 (Homuth) discloses a piston ring for use in hydraulic cylinder cushions that seals in one direction only. Slots cut in the upper surface of the piston ring allow fluid to pass if the ring bears against the slotted surface. The piston ring has conventional limited seal characteristics in one piston direction but allows relative free fluid flow by-pass in the opposite direction.

There are various problems with the prior art seals, especially the seals in pumps used to pump cryogenic liquids. These problems include seal leakage, excessive heat transfer to cryogenic fluids, excessive wear, and excessive stresses on the piston rings due to trapped and expanding fluid.

It is desired to have a seal assembly which minimizes seal leakage.

It is further desired to have a seal assembly which minimizes the amount of heat generated by the seal, especially when cryogenic fluids are being pumped in order to minimize the effect of heat transfer to the cryogenic fluid.

It is still further desired to have a seal assembly which supports itself as it wears, thereby reducing or eliminating stresses on the seal assembly and maximizing the life of the seal assembly.

It is still further desired to have a seal assembly that minimizes stresses due to trapped and expanding fluid and/or allow fluid to pass around the seal assembly unimpeded in the direction opposite the direction it is intended to seal.

It is still further desired to have a seal assembly which acts as a check valve, allowing fluid flow in one direction and minimizing the effect of frictional heating of the seal assembly, thereby allowing fluid to flow over a piston wall and cool a reciprocating pump, such as a pump used for pumping cryogenic fluids.

It also is desired to have an improved seal assembly which overcomes the difficulties and disadvantages of the prior art to provide better and more advantageous results.

In one aspect, the present invention provides a seal assembly for blocking a flow of a fluid in an annular space between a first surface and a second surface spaced apart from and surrounding the first surface, each of the first and second surfaces being substantially symmetrical about a longitudinal axis and at least one of the first and second surfaces moving in a relative reciprocating manner substantially parallel to the longitudinal axis, said assembly comprising:
a solid first split annular member having a radially open groove extending peripherally in and around an end face of the member and a slot extending radially and axially through the first member;
a solid second split annular member having an inner perimeter greater than the inner perimeter of the first member, an outer perimeter substantially equal to the outer perimeter of the first member, and a slot extending radially and axially through the second member;
said second member being axially aligned with said first member and at least partially disposed in said groove with the slot thereof peripherally spaced from the slot of the first member and
axial biasing means forcing the first and second members together in the axial direction.

In another aspect, the invention provides an apparatus comprising:
an inner cylindrical member;
an outer cylindrical member spaced apart from and surrounding said inner member to define an annular space therebetween, the opposed surfaces of said members being substantially symmetrical about a longitudinal axis and at least one of the first and second surfaces moving in a relative reciprocating manner substantially parallel to the longitudinal axis; and
a seal assembly of the present invention blocking flow of a fluid in the annular space.

The invention provides *inter alia* a seal assembly for blocking a flow of a fluid in an annular space between a first surface and a second surface spaced apart from and surrounding a first surface. Each of the first and second surfaces are substantially symmetrical about a longitudinal axis and at least one of the first and second surfaces moves in a relative reciprocating manner substantially parallel to the longitudinal axis. The seal assembly includes a substantially solid first member, a substantially solid second member, and a first biasing means. The substantially solid first member is disposed in the annular space. The first member has a first inner perimeter substantially symmetrical about the longitudinal axis adjacent to and peripherally surrounding the first surface, a first outer perimeter substantially symmetrical about the longitudinal axis abutting the second surface and being peripherally surrounded by the second surface, a first end substantially perpendicular to the longitudinal axis, and a second end substantially parallel to and opposite the first end. The second end has a groove within and extending peripherally around the second end adjacent the first outer perimeter of the second end. The first member has a first slot extending radially from the first inner perimeter to the first outer perimeter and axially from the first end to the second end. The substantially solid second member is disposed in the annular space adjacent the second end of the first member. At least a portion of the second member is disposed in the groove within the second end of the first member. The second member has a second inner perimeter greater than the first inner perimeter substantially symmetrical about the longitudinal axis, a second outer perimeter substantially equal to the first outer perimeter, a first face substantially perpendicular to the longitudinal axis abutting the second end of the first member, and a second face substantially parallel to and opposite the first face. The second member has a second slot peripherally spaced apart from the first slot, the second slot extending radially from the second inner perimeter to the second outer perimeter and axially from the first face to the second face. The first biasing means is disposed in the annular space between the first end of the first member and a first part of the first surface opposite the first end. The first biasing means is adapted to exert a substantially axial force substantially parallel to the longitudinal axis.

In one embodiment, the first biasing means is a spring. In another embodiment, a seal is provided between the first and second surfaces in an alternating manner as at least one of the first and second surfaces moves in a relative reciprocating manner. In another embodiment, the first surface is an outer surface of a piston and the second surface is an inner wall of a housing surrounding the outer surface of the piston.

The seal assembly of the invention can include a second biasing means. The second biasing means is disposed in the annular space between the first inner perimeter of the first member and a second part of the first surface opposite the first inner perimeter. The second biasing means is adapted to exert a substantially radial force substantially perpendicular to the longitudinal axis. In one embodiment, the second biasing means is a spring.

In one embodiment, of the invention is a seal assembly for providing a seal between an inner wall of a housing and an outer surface of a piston slideably mounted within the housing for a reciprocating movement substantially parallel with a longitudinal axis. The piston and the housing are substantially symmetrical about the longitudinal axis. The piston has a gland in the outer surface and extending peripherally around the outer surface perpendicular to the longitudinal axis. The gland has a width, a first sidewall, a second sidewall spaced apart from and parallel to the first sidewall, and a base. In this embodiment, the seal assembly includes a substantially solid first member, a substantially solid second member, and a first biasing means. The substantially solid first member is disposed in the gland. The first member has a first inner perimeter substantially symmetrical about the longitudinal axis adjacent to and peripherally surrounding the base of the gland, a first outer perimeter substantially symmetrical about the longitudinal axis abutting the inner wall of the housing and being peripherally surrounded by the inner wall, a first end substantially perpendicular to the longitudinal axis, and a second end substantially parallel to and opposite the first end. The second end has a groove within and extending peripherally around the second end adjacent the first outer perimeter of the second end. The first member has a first slot extending radially from the first inner perimeter to the first outer perimeter and axially from the first end to the second end. The substantially solid second member is disposed in the gland adjacent the second end of the first member. At least a portion of the second member is disposed in the groove within the second end of the first member. The second member has a second inner perimeter greater than the first inner perimeter substantially symmetrical about the longitudinal axis, a second outer perimeter substantially equal to the first outer perimeter, a first face substantially perpendicular to the longitudinal axis abutting the second end of the first member, and a second face substantially parallel to and opposite the first face. The second member has a second slot peripherally spaced apart from the first slot. The second extends radially from the second inner perimeter to the second outer perimeter and axially from the first face to the second face. The first biasing means is disposed in the gland between the first end of the first member and a first part of a first sidewall of the gland. The first biasing means is adapted to exert a substantially axial force substantially parallel to the longitudinal axis.

A second biasing means can be disposed in the gland between the base of the gland and the first inner perimeter of the first member. The second biasing means is adapted to exert a substantially radial force substantially perpendicular to the longitudinal axis.

In another embodiment of the invention, the seal assembly is for blocking a flow of fluid in an annular space between a first surface and a second surface having an inside perimeter spaced apart from and surrounding the first surface. Each of the first and second surfaces are substantially symmetrical about a longitudinal axis and at least one of the first and second surfaces moves in a relative reciprocating manner substantially parallel to the longitudinal axis. In this embodiment, the seal assembly includes a substantially solid first member, a substantially solid second member, and a biasing means. The substantially solid first member is disposed in the annular space. The first member has a first inner perimeter substantially symmetrical about the longitudinal axis adjacent to and peripherally surrounding the first surface, a first outer perimeter substantially symmetrical about the longitudinal axis abutting the second surface and being peripherally surrounded by the second surface, a first end substantially perpendicular to the longitudinal axis, and a second end substantially parallel to and opposite the first end. The second end has a groove within and extending peripherally around the second end adjacent the first outer perimeter of the second end. The first member has a first slot extending radially from the first inner perimeter to the first outer perimeter and axially from the first end to the second end. The substantially solid second member is disposed in the annular space adjacent the second end of the first member, and at least a portion of the second member is disposed in the groove. The second member has a second inner perimeter greater than the first inner perimeter substantially symmetrical about the longitudinal axis, a second outer perimeter substantially equal to the first outer perimeter, a first face substantially perpendicular to the longitudinal axis abutting the second end of the first member and a second face substantially parallel to and opposite the first face. The second member has a slot peripherally spaced apart from the first slot. The second slot extends radially from the second inner perimeter to the second outer perimeter and axially from the first face to the second face. The biasing means is disposed in the annular space between the first end of the first member and a first part of the first surface opposite the first end. The biasing means is adapted to exert a substantially axial force substantially parallel to the longitudinal axis. In this embodiment, the first outer perimeter is greater than the inside perimeter and at least one of the first and second members is compressed within the annular space, thereby exerting a substantially radial force substantially perpendicular to the longitudinal axis. In one variation of this embodiment, at least one of the first and second members is made of a material which does not cold flow.

Another embodiment of the invention is a seal assembly for providing a seal between an inner wall of a housing and an outer surface of a piston slideably mounted within the housing for a reciprocating movement substantially parallel with a longitudinal axis. The housing has an inside perimeter, and the piston and the housing are substantially symmetrical about the longitudinal axis. The piston has a gland in the outer surface and extending peripherally around the outer surface perpendicular to the longitudinal axis. The gland has a width, a first sidewall, a second sidewall spaced apart from and parallel to the first sidewall, and a base. In this embodiment, the seal assembly includes a substantially solid first member, a substantially solid second member, and a biasing means. The substantially solid first member is disposed in the gland. The first member has a first inner perimeter substantially symmetrical about the longitudinal axis adjacent to and peripherally surrounding the base of the gland, a first outer perimeter substantially symmetrical about the longitudinal axis abutting the inner wall of the housing and being peripherally surrounded by the inner wall, a first end substantially perpendicular to the longitudinal axis, and a second end substantially parallel to and opposite the first end. The second end has a groove within and extending peripherally around the second end adjacent the first outer perimeter of the second end. The first member has a first slot extending radially from the first inner perimeter to the first outer perimeter and axially from the first end to the second end. The substantially solid second member is disposed in the gland adjacent the second end of the first member, and at least a portion of the second member is disposed in the groove. The second member has a second inner perimeter greater than the first inner perimeter substantially symmetrical about the longitudinal axis, a second outer perimeter substantially equal to the first outer perimeter, a first face substantially perpendicular to the longitudinal axis abutting the second end of the first member, and a second face substantially parallel to and opposite the first face. The second member has a second slot peripherally spaced apart from the first slot, the second slot extending radially from the second inner perimeter to the second outer perimeter and axially from the first face to the second face. The biasing means is disposed in the gland between the first end of the first member and a first part of a first sidewall of the gland. The biasing means is adapted to exert a substantially axial force substantially parallel to the longitudinal axis. In this embodiment, the first outer perimeter is greater than the inside perimeter and at least one of the first and second members is compressed within a space between the inner wall of the housing and the base of the gland, thereby exerting a substantially radial force substantially perpendicular to the longitudinal axis. In a variation of this embodiment, at least one of the first and second members is made of a material which does not cold flow.

Another aspect of the present invention is a reciprocating pump having a piston and at least one seal assembly adjacent the piston, the seal assembly being a seal assembly of the invention. Another aspect of the invention is a reciprocating pump having a shaft and at least one seal assembly adjacent the shaft, the seal assembly being a seal assembly of the invention.

The invention will be described by way of example with reference to the accompanying drawings, in which:
Figure 1 is a schematic representation illustrating the seal assembly of the present invention;
Figure 2 is a schematic representation illustrating the assembled top ring and bottom ring of the present invention;
Figure 3 is a schematic representation of a side view of the top ring of Figure 2;
Figure 4 is a schematic representation of an end view of the top ring of Figure 2;
Figure 5 is a schematic representation of the bottom ring of Figure 2;
Figure 6 is a schematic representation of an end view of the bottom ring of Figure 2;
Figure 7 is a schematic representation illustrating the operation of the seal assembly of Figure 1 during a suction stroke;
Figure 8 is a schematic representation illustrating the operation of the seal assembly of Figure 1 during a discharge stroke.
Figure 9 is a schematic representation illustrating a prior art seal assembly;
Figure 10 is a schematic representation illustrating an assembled top ring and bottom ring for a prior art seal assembly having two rings;
Figure 11 is a schematic representation of one ring of the prior art assembly shown in Figure 10;
Figure 12 is a schematic representation of an end view of the prior art ring shown in Figure 11;
Figure 13 is a schematic representation of a ring of a prior art seal assembly having one ring; and
Figure 14 is a schematic representation of an end view of the prior art ring shown in Figure 13.

The seal assembly of the invention may be used with a reciprocating pump for pumping a fluid that may be a liquid, a gas, or a combination of both. The seal assembly is particularly useful with cryogenic pumps for pumping cryogenic fluids, such as Applicants' double-acting, two-stage pump. The structure and operation of that pump are discussed in greater detail in U.S. Patent Application No. 09/825823 and a corresponding European patent application being filed concurrently with the present application. The seal assembly may be used as a piston ring to seal a reciprocating piston with the inner wall of the housing of the pump. The seal assembly also may be used as a shaft ring to seal a reciprocating shaft operating within a bore. More generally, the seal is a dynamic seal assembly used to seal two parts moving in relation to one another.

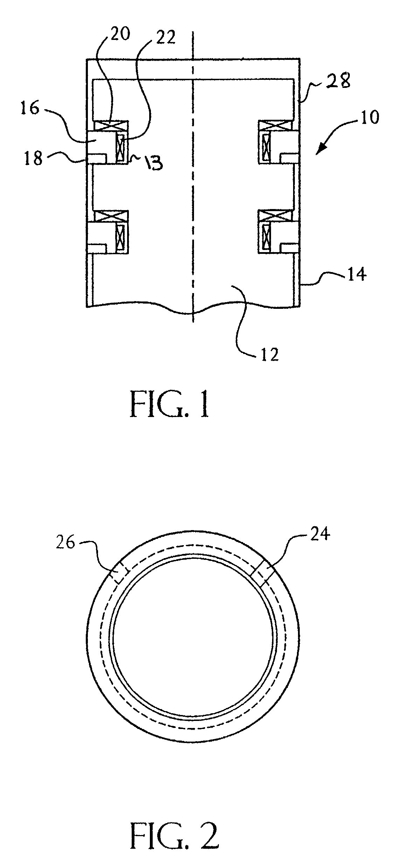

Figure 1 illustrates the seal assembly 10 being used as a piston ring to seal a reciprocating piston 12 within a cylinder wall 14. High pressure fluid to be sealed flows in the annular space 28 between the piston and the cylinder wall. In the preferred embodiment, the seal assembly includes a top ring 16, a bottom ring 18, a first spring 20 for axial loading, and a second spring 22 for radial loading. The top ring 16 has a radially open groove 17 extending peripherally in and around its lower face to receive the bottom ring 18. Although the seal assembly in the preferred embodiment is illustrated and discussed as being used to seal a substantially cylindrical piston in a substantially cylindrical housing, persons skilled in the art will recognize that the seal assembly also may be used for other applications where the housing and piston may have shapes other than cylindrical.

In the preferred embodiment, the top ring 16 and the bottom ring 18 are circular, with each having a single cut or slot 24, 26, as shown in Figures 2 to 6. The slot serves two purposes. First, it allows the ring to expand or contract due to temperature variations and the fact that the seal material can expand or contract to a different degree, as compared to the materials of the piston 12 and the cylinder 14. For example, at low temperatures, the slot increases as the ring shrinks. At high temperatures, the slot decreases as the ring expands. The second purpose of the slot is to allow the seal assembly 10, in particular the top ring 16, to maintain contact with the cylinder wall 14 as the ring wears and the material of the ring is shed. As the ring wears, the slot increases in size.

The seal assembly 10 also is intended to allow some fluid flow in one direction only. To accomplish this, a spring 20, preferably a wave spring (such as that manufactured by Smalley), is installed on the high pressure side of the top ring 16, as shown in Figure 1. Persons skilled in the art will recognize that other types of springs and other types of biasing means also may be used for this purpose. This spring pushes the two-piece piston ring (i.e., the combined top ring 16 and bottom ring 18) against the piston 12 in the same direction as the high pressure of the flowing fluid. When the pressure is reversed (e.g., when the piston changes direction), the fluid pressure tends to lift the two-piece piston ring off the piston ring gland, compresses the spring, and allows fluid to pass around the two-piece piston ring and through the spring. The piston ring gland is a groove (13) in the outer surface of the piston which extends peripherally around the piston and in which the seal assembly is set.

This reversal of pressure can occur between multiple sets of the two-piece piston rings on a piston due to the fluid expanding. Since there is generally more than one two-piece piston ring (i.e., the combined top ring 16 and bottom ring 18) on a piston 12, the fluid that gets past one of the two-piece piston rings often will not be able to pass the second, or subsequent two-piece piston rings, and heating of this fluid can cause tremendous pressure increases between the various sets of two-piece piston rings, thereby damaging the two-piece piston rings. This is especially true for cryogenic applications where the two-piece piston rings have to seal a boiling, or close to boiling, cryogenic fluid.

The top ring 16 and bottom ring 18 are assembled with their slots 24, 26 at different orientations, so that the fluid sealed has no significant opening to pass through. The seal assembly 10 seals the fluid primarily along two leakage paths. The first leakage path is parallel to the axis of the piston and the seal assembly, and is always in the same direction as the direction of motion of the piston. Since both the top and the bottom rings each have a slot in the periphery, these slots must not be aligned, or else the fluid will have an opening to pass through. The proper arrangement of the top and the bottom rings is shown in Figure 2, where the slots are not aligned. Most piston ring designs are intended to seal along the first leakage path. The second leakage path is under or between the piston rings. The seal assembly 10 of the present invention eliminates this second leakage path completely by having the top ring 16 completely enclose the end gap or slot 26 in the bottom ring 18, as shown in Figures 1 and 2.

The seal assembly 10 also uses a spring 22, commonly known as a piston ring expander, to push the two-piece piston ring (i.e., the combined top ring 16 and bottom ring 18) against the inner wall 14 of the cylinder. This spring assists the fluid pressure in sealing the two-piece piston ring against the inner wall, which is the only purpose for this spring in the present invention. This type of spring also is used in prior art designs to provide a seal, preventing gross leakage through a bottom ring where the bottom ring is cut and open.

Persons skilled in the art will recognize that in alternate embodiments the spring 22 may be eliminated by using certain types of materials for the two-piece piston ring (i.e., the combined top ring 16 and bottom ring 18) which do not cold flow, such as polyimid materials and similar materials. Cold flow is a phenomena whereby a material changes shape very slowly. Many other types of materials also can be used which would act both as a piston ring and a piston ring expander. Such a piston ring would be made substantially larger in diameter than that of the bore which it is intended to seal, so that even after significant wear the outer diameter of the piston ring is larger than the inner diameter of the cylinder. Such a design could provide sufficient outward radial load to effect a seal without additional spring load.

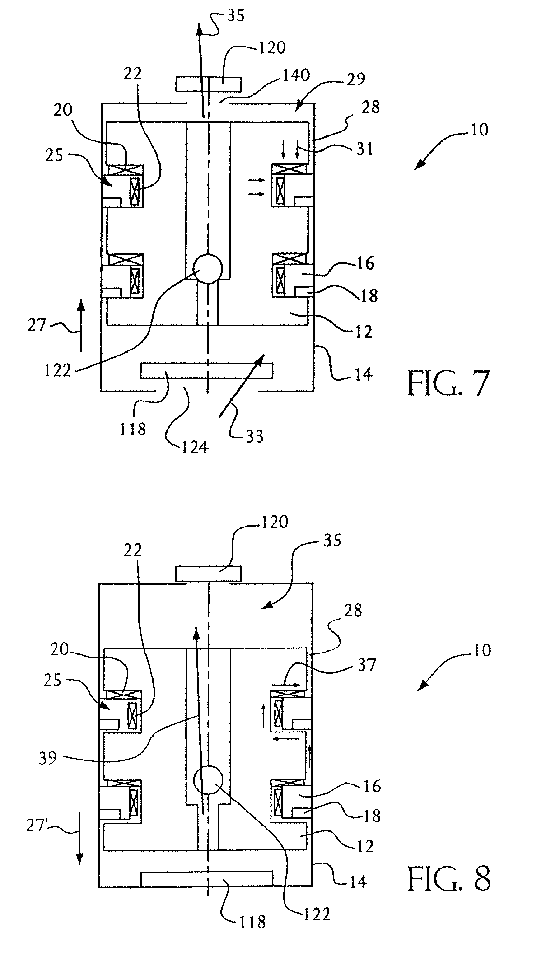

Figures 7 and 8 illustrate how the seal assembly 10 of the present invention operates during the pumping cycle of a cryogenic pump, such as Applicants' double-acting, two-stage pump of U.S. Patent Application No. 09/825823 and the corresponding European patent application being filed concurrently with the present application. Figure 7 illustrates operation of the two-piece piston ring (i.e., the combined top ring 16 and bottom ring 18) during a suction stoke of the pump when inlet valve 118 allows fluid to enter the inlet 124 of the pump (as indicated by arrow 33) and discharge valve 120 allows fluid to exit the pump at the discharge 140 (as indicated by arrow 35). An interstage valve 122 is closed during this suction stroke. During this stroke, the piston 12 moves in the direction of the arrow 27 in Figure 7 toward the high pressure fluid 29 in annular space 28 to be sealed. The pressure of the fluid, as illustrated by arrows 31, assists in sealing, and the seal assembly provides for two seals; a seal between the seal assembly and the inner wall 14 of the cylinder, and a seal between the piston and the seal assembly. The location 25 in Figure 7 identifies the position of the slot 24 in the top ring 16 of the seal assembly.

Figure 8 illustrates operation of the seal assembly 10 during a discharge stroke of the pump. As indicated by the arrow 27' in Figure 8, during this stroke the piston 12 is moving in a direction opposite that in Figure 7. During the discharge stroke, the two-piece piston ring (i.e., the combined top ring 16 and bottom ring 18) lifts off the piston due to the pressure differential and the frictional forces of the two-piece ring against the inner wall 14 of the cylinder. The lines 37 indicate fluid flow around the two-piece piston ring while high pressure fluid flows into the second compression chamber from the first compression chamber via the interstage valve 122, as indicated by arrow 39. The location 25 in Figure 8 indicates the position of the slot 24 in the top ring 16 of the seal assembly.

The cooling feature of the seal assembly 10 is only applicable to a two-stage pump, such as Applicants' double-acting, two-stage pump. If it were to be applied to a single-stage pump, there would be no reason to have the piston ring lift off the seat and act as a check valve except in instances where high pressure fluid, e.g., "blowby gas," is trapped between the rings, such that this blowby gas might create extremely high pressure due to heating and expanding, and subsequently damage a piston ring due to this high pressure. The suction fluid in a single-stage pump would not be injected through the rings, but through a separate inlet valve. In Applicants' two-stage pump, the piston ring heat goes into the second-stage compression chamber, which is perfectly acceptable. On the other hand, the two-piece piston ring would work very well in a conventional pump, but without the added feature that it will lift off of the seat and act as a check valve and thus cool the cylinder wall. Blowby gas serves this purpose in a conventional single-stage pump.

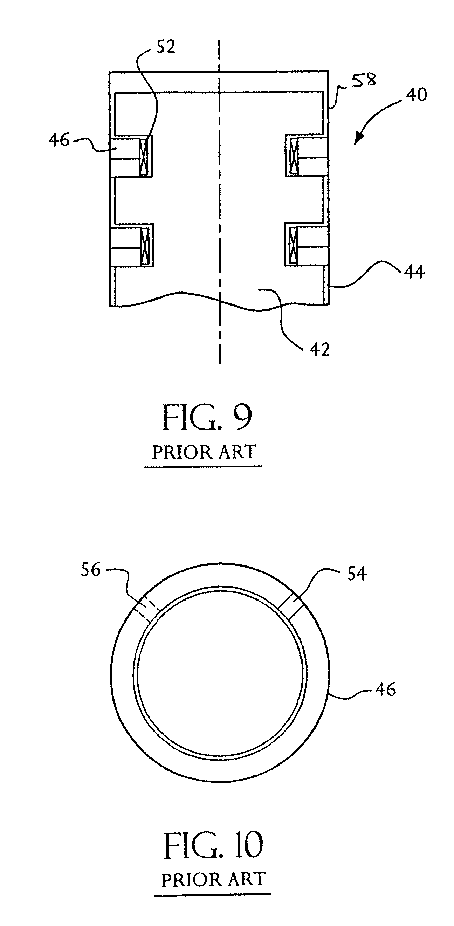

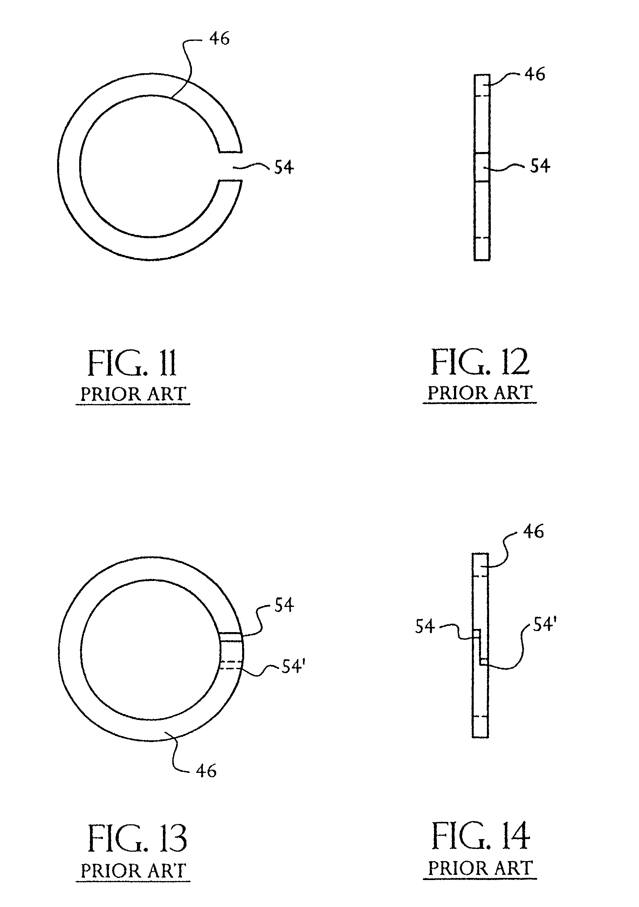

To understand how the seal assembly 10 of the present invention differs from the prior art, a prior art seal assembly 40 is described below. Prior art piston rings 46 are either single-piece or two-piece piston rings that use a piston ring expander 52, as shown in Figure 9. Figures 11 and 12 illustrate one ring (piece) of a two-piece prior art piston ring; and Figures 13 and 14 illustrate a ring of a one-piece prior art piston ring. These prior art piston rings can seal well against the inner wall 44 of the cylinder to block flow through the annular space 58 between the piston 42 and said wall 44. Both block fluid leakage by covering the end gap or slots 54, 56 of the rings by staggering the orientation of the rings, as shown in Figure 10.

In a one-piece design, the gap is covered by having a special cut, known as a step cut 54, 54', in the end of the ring 46, so that there can be some overlap when looking down on the ring (similar to a two-piece design), as shown in Figures 13 and 14. It also can seal against a piston ring gland, but will have an opening that must be covered and sealed through the bottom portion of the ring. This opening is covered by the piston ring expander 52. The piston ring expander, however, is not capable of sealing against the bottom or base of the piston ring gland, since it is a metal to metal surface, and has no benefit from being pressure energized. This single area results in the vast majority of leakage past the piston ring.

The seal assembly 10 of the present invention closes off this area using the top ring 16, and further uses pressure to assist in the sealing of this area. By having the top ring enclose the bottom ring 18 in this manner, sealing against the piston ring gland can be improved considerably. This feature also adds considerable strength to the seal assembly. Because the top ring is supported across the gap or slot 26 in the lower ring, bending stresses caused by the pressure are essentially negated, and breakage of the top ring due to pressure stresses can be eliminated. This feature also allows the ring to be much thinner, resulting in less heat generation due to the reduced pressure load. By reducing the amount of heat generated by the two-piece piston rings, the negative impact of this heat on the inlet fluid is further reduced.

The seal assembly 10 of the present invention overcomes various deficiencies in the prior art designs, because it is inherently stronger, inherently seals better, and prevents premature failure by allowing the flow of fluid in one direction. It is inherently stronger because the slot 24, which is allowed to grow as the top ring 16 wears or shrinks due to low temperatures, does not result in the top ring losing support from the bottom ring 18. For any given top and bottom ring thickness and height, the top ring will be many times stronger due to the section of material in the top ring that rests on the piston ring gland where it spans the slot 26 of the bottom ring.

The seal assembly 10 inherently seals better because the slot 26 in the bottom ring 18 also is fully enclosed by the top ring 16, instead of being open like a prior art ring, or being covered only by a spring. The material on the top ring that encloses the slot in the bottom ring also is pressure energized to assist in proper sealing. The result is a reduction in leakage of at least two times, and can be made to be "bubble tight". "Bubble tight" is a standard measure of leakage on the order of 10⁻³ standard cubic centimeters per second.

The seal assembly 10 prevents premature failure, which often occurs when a fluid is trapped between two sets of rings and the pressure increases. For example, when a cryogenic fluid flashes between two sets of rings, the increase in pressure can damage one or both sets of rings if the pressure can not be released quickly enough. The seal assembly will allow fluid to pass the ring on the lower pressure end, thereby relieving the higher pressure. This design also makes use of a spring to allow for this feature and assist in maintaining a tight seal throughout the stroke of the piston 12. This feature also allows the normal flow of fluid around the two-piece piston ring in one direction to allow for cooling of the two-piece piston ring by dissipating heat generated during the compression stroke for the two-stage pump discussed in U.S. Patent Application No. 09/825823 and a corresponding European patent application being filed concurrently with the present application.

Although illustrated and described herein with reference to certain specific embodiments, the present invention is nevertheless not intended to be limited to the details shown. Rather, various modifications may be made in the details within the scope of the following claims .

## Claims

1. A seal assembly (10) for blocking a flow of a fluid in an annular space (28) between a first surface and a second surface spaced apart from and surrounding the first surface, each of the first and second surfaces being substantially symmetrical about a longitudinal axis and at least one of the first and second surfaces moving in a relative reciprocating manner substantially parallel to the longitudinal axis, said assembly comprising:
a solid first split annular member (16) having a radially open groove (17) extending peripherally in and around an end face of the member and a slot (24) extending radially and axially through the first member (16);
a solid second split annular member (18) having an inner perimeter greater than the inner perimeter of the first member (16), an outer perimeter substantially equal to the outer perimeter of the first member (16), and a slot (26) extending radially and axially through the second member (18);
said second member (18) being axially aligned with said first member (16) and at least partially disposed in said groove (17) with the slot (26) thereof peripherally spaced from the slot (24) of the first member (16) and
axial biasing means (20) forcing the first and second members (16, 18) together in the axial direction.

2. A seal assembly as claimed in Claim 1, further comprising radial biasing means (22) exerting a radial force on the first member (16).

3. A seal assembly as claimed in Claim 1 or Claim 2, wherein the axial biasing means is a spring (20).

4. A seal assembly as claimed in Claim 2 or Claim 3, wherein the radial biasing means is a spring (22).

5. A seal assembly as claimed in any one of the preceding claims, wherein the first and second members are circular.

6. A seal assembly as claimed in any one of the preceding claims, wherein at least one of the first and second members is made of a material which does not cold flow

7. A reciprocating pump (10) having a piston (12) and at least one seal assembly (10) as defined in any one of the preceding claims surrounding the piston.

8. A reciprocating pump having a shaft and at least one seal assembly as defined in any one of Claims 1 to 6 surrounding the shaft.

9. An apparatus comprising:
an inner cylindrical member (12);
an outer cylindrical member (14) spaced apart from and surrounding said inner member (12) to define an annular space (28) therebetween, the opposed surfaces of said members being substantially symmetrical about a longitudinal axis and at least one of the first and second surfaces moving in a relative reciprocating manner substantially parallel to the longitudinal axis; and
a seal assembly (10) blocking flow of a fluid in the annular space,
**characterized in that** the seal assembly (10) is as defined in any one of Claims 1 to 6.

10. An apparatus as claimed in Claim 9, wherein the cylinders are right circular cylinders.

11. An apparatus as claimed in Claim 9 or Claim 10, wherein the inner member is a piston (12) and the outer member is a housing (14) surrounding the piston (12).

12. An apparatus as claimed in Claim 11, wherein the piston (12) has a gland (13) extending peripherally around its outer surface perpendicular to the longitudinal axis and in which the first split annular member (16) is disposed and extends radially therefrom to abut the housing (14).

13. An apparatus as claimed in Claim 12, wherein the axial biasing means (20) acts between a sidewall of the gland (13) and the first split annular member (16).

14. An apparatus as claimed in Claim 13, wherein the radial second biasing means (22)acts between the base of the gland (13) and the inner perimeter of the first split annular member (16).

15. An apparatus as claimed in any one of Claims 8 to 13, wherein the outer perimeter of the first split annular member (16) is greater than the inside perimeter of the outer cylindrical member (14) and at least one of the first and second split annular members (16, 18) is compressed within the annular space (28), thereby exerting a substantially radial force substantially perpendicular to the longitudinal axis.

16. An apparatus as claimed in any one of Claims 7 to 15 which is a double acting pump.

17. A double acting pump as claimed in Claim 16, wherein the axial biasing means (20) is installed on the high pressure side of the first split annular member (16).

18. A double acting pump as claimed in Claim 16 or Claim 17, wherein the seal assembly (10) permits fluid flow around the split annular members (16, 18) in one direction.
